# EUROPÄISCHE PATENTANMELDUNG

(11) **EP 3 539 763 A1**
(43) Veröffentlichungstag der Anmeldung: **18.09.2019**
(21) Anmeldenummer: 19159630.3
(22) Anmeldetag: 27.02.2019
(51) Int. Cl.: B30B 5/06, B29C 44/56

(54) **VERFAHREN ZUM BEARBEITEN VON SCHAUMSTOFFEN MITTELS FÖRDERBÄNDERN**

(30) Priorität: 09.03.2018 DE 102018105531
(71) Anmelder: tremco illbruck GmbH, 92439 Bodenwöhr (DE)
(72) Erfinder: Geyer, Walter, 92421 Schwandorf (DE); Komma, Markus, 93133 Burglengenfeld (DE); Nauck, Helmar, 12557 Berlin (DE)
(74) Vertreter: Bittner, Bernhard

(57) **Zusammenfassung**

Ein Verfahren zum Komprimieren von Schaumstoffen (1) und insbesondere zum Herstellen von Dichtbändern, wobei ein Schaumstoff (1) entlang eines vorbestimmten Transportpfads transportiert wird und wenigstens zeitweise zwischen einer ersten Kompressionseinrichtung (2) und einer zweiten Kompressionseinrichtung (4) gefördert wird und durch diese beiden Kompressionseinrichtungen in wenigstens eine Kompressionsrichtung (Z) komprimiert wird. Erfindungsgemäß weist wenigstens eine dieser Kompressionseinrichtung (2,4) eine sich entlang des Transportpfads des Schaumstoffes erstreckende Kompressionsfläche auf, welche den Schaumstoff wenigstens zeitweise kontaktiert um den Schaumstoff zu komprimieren.

## Beschreibung

Die vorliegende Erfindung bezieht sich auf ein Verfahren zum Behandeln von Schaumstoffen und/oder ein Verfahren zum Herstellen eines Schaumstoffbandes. Derartige Verfahren sind aus dem Stand der Technik seit Langem bekannt. So ist es beispielsweise bekannt, dass Schaumstoffe imprägniert werden und anschließend mittels Rollen komprimiert werden, beispielsweise um in einem solchen komprimierten Zustand konfektioniert zu werden. Üblicherweise werden dabei die Schaumstoffe zwischen zwei Walzen gefördert und dabei komprimiert. Durch die heute übliche Walzenkomprimierung bei imprägnierten Schaumstoffbändern entsteht teilweise ein Längsverschub der Innenlage zur Außenlage. Behandelt man die spätere Seitenfläche, beispielsweise um sie luftdicht zu bekommen (was beispielsweise durch Aufbringen einer dünnen Folie oder Flüssigkunststoffschicht erfolgen kann), verschiebt sich auch diese behandelte Oberfläche und kann zum Teil Falten aufwerfen, was später in der Anwendung Undichtigkeiten der Fugenflanke zur Folge haben kann.

Der vorliegenden Erfindung liegt daher die Aufgabe zugrunde, derartige Ungenauigkeiten im Rahmen der Herstellung von Bändern, beispielsweise Dichtbändern, zu verringern. Diese Aufgabe wird erfindungsgemäß durch ein Verfahren nach Anspruch 1 erreicht. Vorteilhafte Ausführungsformen und Weiterbildungen sind Gegenstand der Unteransprüche.

Bei einem erfindungsgemäßen Verfahren zum Komprimieren von Schaumstoffen und/oder zum Herstellen eines Schaumstoffbandes und/oder eines Dichtbandes wird ein Schaumstoff entlang eines vorbestimmten Transportpfads transportiert und wenigstens zeitweise zwischen einer ersten Kompressionseinrichtung und einer zweiten Kompressionseinrichtung gefördert, wobei der Schaumstoff durch diese beiden Kompressionseinrichtungen und insbesondere durch ein Zusammenwirken dieser beiden Kompressionseinrichtungen in wenigstens einer Kompressionsrichtung komprimiert wird.

Erfindungsgemäß weist wenigstens eine dieser Kompressionseinrichtungen eine sich entlang des Transportpfads des Schaumstoffes erstreckende Kompressionsfläche auf, welche den Schaumstoff wenigstens zeitweise kontaktiert um den Schaumstoff zu komprimieren.

Während also im Stand der Technik üblicherweise Kompressionsrollen eingesetzt werden, welche den Schaumstoff nur kurz entlang seines Transports kontaktieren, wird im Rahmen der vorliegenden Erfindung vorgeschlagen, den Schaumstoff länger zu kontaktieren, um so die Komprimierung effizienter zu gestalten.

Bei einem weiteren bevorzugten Verfahren erstreckt sich die Kompressionsfläche in der Transportrichtung und/oder entlang des Transportpfads um mehr als 4cm, bevorzugt um mehr als 10cm, bevorzugt um mehr als 20cm.

Es wird darauf hingewiesen, dass im Folgenden teilweise die Begriffe Kompressionseinrichtung und Transporteinrichtung synonym verwendet werden, da die Kompressionseinrichtung bevorzugt auch als ggf. angetriebene Transporteinrichtung fungiert, welche den Schaumstoff transportiert.

Unter einer sich entlang des Transportpfads erstreckenden Kompressionsfläche wird eine Fläche verstanden, welche sich in einer Richtung erstreckt, die zumindest auch eine Komponente entlang des Transportpfads aufweist. So kann diese Kompressionsfläche etwa schräg zu dem Transportpfad verlaufen.

Auch wäre es möglich, dass zwischen den beiden Kompressionseinrichtungen bzw. den durch diese beiden Kompressionseinrichtungen gebildeten Kompressionsflächen ein Spalt gebildet wird, innerhalb dessen der Schaumstoff transportiert wird und sich bevorzugt dieser Spalt in der Transportrichtung verjüngt

Bevorzugt weist wenigstens eine dieser Kompressionseinrichtungen ein umlaufendes Band auf, welches den Schaumstoff wenigstens zeitweise kontaktiert, um den Schaumstoff so zu komprimieren. Bevorzugt wird die oben erwähnte Kompressionsfläche durch diejenige Oberfläche des umlaufenden Bandes ausgebildet, welches den Schaumstoff kontaktiert.

Bevorzugt wird der Schaumstoff in einer Richtung komprimiert, welche senkrecht zu der Transportrichtung des Schaumstoffs ist und insbesondere auch senkrecht zu einer Breitenrichtung des Schaumstoffs. Es wird hier beschrieben, dass die Komprimierung durch wenigstens ein Transportband als Kompressionseinrichtung erfolgt. Es wäre jedoch auch denkbar, dass die Kompression durch andere Elemente erfolgt, welche jedoch sich ebenfalls bevorzugt auch entlang der Transportrichtung (und insbesondere auch schräg hierzu) des Schaumstoffs und auch in einer hierzu senkrechten Breitenrichtung erstrecken und besonders bevorzugt teilweise eben sind.

Anstelle eines Transportbands könnte beispielsweise auch eine Gleitplatte vorgesehen sein, entlang derer der Schaumstoff gleiten kann. Daneben könnten auch eine Vielzahl von insbesondere kleinen und hintereinander angeordneten Rollen vorgesehen sein, entlang derer der Schaumstoff gefördert wird. Auch könnten Kombinationen aus derartigen Gleitplatten mit dazwischen angeordneten Rollen vorgesehen sein. Damit behält sich die Anmelderin auch vor, Schutz für ein Verfahren unter Zuhilfenahme einer Kompressionseinrichtung zu richten, welche eine im Wesentlichen ebene Kompressionsfläche ausbildet, welche sich sowohl in der Transportrichtung des Schaumstoffs als auch in einer hierzu senkrechten Breitenrichtung des Schaumstoffs erstreckt.

Unter einem Erstrecken in Richtung in der Transportrichtung wird verstanden, dass sich das Transportband zumindest in einer Richtung erstreckt, welche auch eine Komponente in der Transportrichtung des Schaumstoffs aufweist.

Besonders bevorzugt wird der Schaumstoff mittels eines umlaufenden Bandes gefördert, welches um wenigstens zwei Endrollen umlaufend angeordnet ist.

Durch die hier beschriebene Vorgehensweise tritt eine gleichmäßigere Komprimierung auf, als wenn eine Rolle verwendet wird. Auf diese Weise kann das Ergebnis erreicht werden, dass eine entsprechende Faltenbildung nicht schräg verläuft. Dies könnte wiederum für die Abdichtung bezüglich einer Fugenflanke vorteilhaft sein. Daneben tritt vorteilhaft eine gleichmäßige Verdichtung auf, was wiederum vorteilhaft für ein späteres homogenes Expandieren bei der Anwendung ist. Im Gegensatz hierzu expandieren aus dem Stand der Technik bekannte Dichtbänder teilweise ungleichmäßig, was zur Folge hat, dass man warten muss, bis sich die volle Dichtleistung eingestellt hat.

Ein weiterer Vorteil der erfindungsgemäßen Vorgehensweise besteht darin, dass geradere Schnittstellen beim Zuschnitt auf der Baustelle entstehen. Bei aus dem Stand der Technik bekannten Bändern entsteht heute teilweise eine Art S-Form an der Schnittstelle, was insbesondere bei dicken Dimensionen sichtbar wird. In diesem Falle werden Stoßstellen schwieriger in der Ausführung.

Bei einer weiteren vorteilhaften Ausführungsform ist auch die andere dieser Kompressionseinrichtungen als ein umlaufendes Band ausgeführt, welches den Schaumstoff wenigstens zeitweise kontaktiert, um den Schaumstoff zu komprimieren. Auch im Falle dieser zweiten Kompressionseinrichtung wäre es denkbar, dass anstelle der Transporteinrichtung eine Vielzahl von kleinen Rollen vorgesehen ist, oder aber eine Gleitplatte entlang derer die Schaumstoffbahn gefördert wird.

Bei einer weiteren vorteilhaften Ausführungsform wird der Schaumstoff durch einen zwischen den Kompressionseinrichtungen gebildeten Zwischenraum gefördert, wobei sich dieser Zwischenraum in der Transportrichtung verjüngt. Dies bedeutet, dass die Kompression auf den Schaumstoff durch die beiden Transportbänder erhöht wird und dieser insofern durch die Fortförderung weiter komprimiert wird. So wäre es möglich, dass die beiden Transporteinrichtungen bzw. diejenigen Kontaktflächen der Transporteinrichtung, welche dem Schaumstoff zugewandt sind, aufeinander zulaufen.

So ist es möglich, dass wenigstens eine der beiden Transporteinrichtungen gegenüber der Transportbahn bzw. der Transportebene schräg angestellt ist, oder sich auch beide bevorzugt stetig aufeinander zubewegen. Bevorzugt verjüngt sich der Zwischenraum zwischen den Transporteinrichtungen nicht nur stetig, sondern auch gleichmäßig und bevorzugt linear.

Bei einer weiteren bevorzugten Ausführungsform verläuft wenigstens eine Transporteinrichtung (etwa ein Förderband) in einer Richtung, welche mit der Transportrichtung des Schaumstoffes einen Winkel einschließt, der größer ist als 1°, bevorzugt größer als 3°, bevorzugt größer als 5°. Bevorzugt verläuft wenigstens eine Transporteinrichtung (etwa ein Förderband) in einer Richtung, welche mit der Transportrichtung des Schaumstoffes einen Winkel einschließt, der kleiner ist als 45°, bevorzugt kleiner als 35°, bevorzugt kleiner als 30°, bevorzugt kleiner als 25°. Unter der Verlaufsrichtung wird dabei diejenige Richtung verstanden, in der sich eine Förderfläche der Transporteinrichtung erstreckt, also etwa im Falle eines Förderbandes diejenige zwischen zwei Umlenkrollen gelegene Fläche, die zum Fördern des Schaumstoffes dient.

Weiterhin ist es möglich, dass nur eine Transporteinrichtung schräg gegenüber der Transportrichtung des Schaumstoffes verläuft, es könnten aber auch beide Transporteinrichtungen entsprechend schräg verlaufen.

Bei einer weiteren vorteilhaften Ausführungsform wird wenigstens eine der beiden Transporteinrichtungen bzw. eines der beiden umlaufenden Bänder durch eine Antriebseinrichtung angetrieben. Besonders bevorzugt werden beide Antriebsbänder angetrieben und besonders bevorzugt werden beide Bänder synchron angetrieben. Es wäre jedoch auch denkbar, dass umgekehrt nur eine Transporteinrichtung angetrieben wird und die Bewegung des Schaumstoffes bewirkt, dass auch die andere Transporteinrichtung sich bewegt.

Bei einem weiteren bevorzugten Verfahren handelt es sich bei dem Schaumstoff um einen imprägnierten Schaumstoff. Besonders bevorzugt wird also der Schaumstoff vor dem Komprimierungsvorgang imprägniert. Dabei ist es möglich, dass dieser Schaumstoff beispielsweise durch ein Imprägnat hindurch gefördert wird.

Bei einem weiteren bevorzugten Verfahren wird an wenigstens einer Oberfläche des Schaumstoffs eine Beschichtung und/oder ein adhäsives Element aufgetragen, beispielsweise ein Klebeband. Bevorzugt erfolgt dieses Anbringen nach dem Komprimieren des Schaumstoffes.

Besonders Bevorzugt wird diese Beschichtung und oder dieses Klebeband an einer Oberfläche aufgetragen, die sich in der Transportrichtung des Schaumstoffes und einer hierzu senkrechten Breitenrichtung erstreckt.

So kann beispielsweise ein Klebeband von einer Vorratsrolle abgewickelt und an der besagten Oberfläche des Schaumstoffes aufgetragen werden.

Bei einem weiteren bevorzugten Verfahren wird der Schaumstoff geschnitten und insbesondere in der Transportrichtung geschnitten. So kann beispielsweise ein Schneiden in mehrere parallele Streifen erfolgen.

Bevorzugt wird weiterhin, insbesondere zur Herstellung von Dichtbändern zunächst der überwiegend offenporige (ggfs. aber auch teilweise geschlossenporige) Schaumstoff, insbesondere in einem Durchlaufprozess, durch ein Tauchbad geführt. Durch ein Walzenpaar, das unter der Imprägnatbadoberfläche liegt, wird der Schaum gequetscht, so dass er sich bei der Expansion mit dem Imprägnat vollsaugt.

Bevorzugt wird nachfolgend der Schaum aus dem Bad geführt und über der Imprägnatoberfläche - bevorzugt durch ein weiteres Walzenpaar - das überschüssige Imprägnat abgequetscht, so dass nur noch eine definierte Imprägnatmenge im Schaum verbleibt.

Bevorzugt wird nachfolgend das Imprägnat getrocknet und bevorzugt in einem Durchlaufofen getrocknet. Nach dem Trocknen wird die Schaumbahn auf die Ziellänge abgelängt. Die Bahn wird nun bevorzugt der Komprimierung zugeführt.

Hier wird bevorzugt der Schaum zunächst auf einem Förderband gerade und senkrecht zu den Komprimierbändern bewegt. Das Förderband übergibt den Schaum an zwei Komprimierförderbänder, die mit einem Anstand der größer als die Schaumdicke ist beginnen (oder dazu geeignet sind die Schaumdicke aufzunehmen) und dann auf den Abstand zusammengeführt werden, die der Zielkomprimierung oder einem (geringfügig) darunter liegenden Wert entsprechen.

Es kann zweckmäßig sein, weitere Förderbänder anzuschließen die den Schaum komprimiert halten. Diese längere Verweilzeit im Zustand der Kompression soll die Rückstellgeschwindigkeit nach Verlassen des letzten Förderbandpaares und vor der Aufwicklung reduzieren.

Bevorzugt wird der Schaumstoff nach der Kompression zwischen zwei im Wesentlichen parallel verlaufenden Transportbändern gefördert. Daneben oder auch zusätzlich wäre es auch denkbar, dass nach der Kompression noch eine weitere, insbesondere schwächere Kompression erfolgt. So wäre denkbar, dass die durch die erste Kompression eine Dicke des Schaumstoffs um einen Großteil reduziert wird, etwa von 100% auf zwischen 15% und 20% und durch die weitere Kompression auf ca. 13% bis 16% durchgeführt wird.

Bevorzugt wird nachfolgend der komprimierte Schaum anschließend aufgewickelt und bevorzugt um eine Hülse gewickelt. Ist die Rolle fertig aufgewickelt wird bevorzugt das Produkt umwickelt und bevorzugt mit einem einseitig selbstklebenden Klebeband umwickelt und verschlossen.

Dieses Verfahren ist besonders vorteilhaft für die Kompression schmaler Bahnen. Insbesondere einseitig oder beidseitig mit Folienkaschierungen überzogene Streifen lassen sich so kontrolliert komprimieren.

Bei einem weiteren vorteilhaften Verfahren wird der Schaumstoff wenigstens zeitweise zwischen zwei weiteren Transporteinrichtungen transportiert wird, welche ebenfalls eine sich entlang des Transportpfads erstreckende Kompressionsfläche aufweisen. Diese Transporteinrichtungen können dabei insbesondere in der Transportrichtung nach den beiden oben erwähnten Bändern angeordnet sein und dazu dienen, einen durch die beiden Kompressionseinrichtungen entstandenen Kompressionsgrad zu halten.

So kann zwischen diesen beiden weiteren Transporteinrichtungen ein sich in der Transportrichtung erstreckender konstant breiter Spalt ausgebildet sein. Diese beiden weiteren Transporteinrichtungen könnten dabei ebenfalls als Transportbänder ausgebildet sein.

Bevorzugt wird das oben erwähnte Klebeband dem Schaumstoff zwischen den ersten Kompressionseinrichtungen und den oben erwähnten weiteren Transporteinrichtungen zugeführt.

Bei einem weiteren bevorzugten Verfahren weist der Schaumstoff eine Breite auf, die größer ist als 5 mm, bevorzugt größer als 10 mm, bevorzugt größer als 15 mm, bevorzugt größer als 20 mm, bevorzugt größer als 30 mm, bevorzugt größer als 50 mm. Weiterhin ist es denkbar, dass der Schaumstoff eine Breite aufweist, die kleiner ist als 400 mm, bevorzugt kleiner als 300 mm, bevorzugt kleiner als 200 mm, bevorzugt kleiner als 150 mm und besonders bevorzugt kleiner als 100 mm.

Bei einer weiteren bevorzugten Ausführungsform weist der Schaumstoff eine Höhe (bzw. Dicke) auf, die größer ist als 5 mm, bevorzugt größer als 10 mm, bevorzugt größer als 15 mm, bevorzugt größer als 20 mm, bevorzugt größer als 25 mm.

Bei einer weiteren vorteilhaften Ausführungsform weist der Schaumstoff eine Höhe bzw. Dicke auf, die kleiner ist als 200 mm, bevorzugt kleiner als 170 mm, bevorzugt kleiner als 170 mm, bevorzugt kleiner als 150 mm, bevorzugt kleiner als 100 mm und besonders bevorzugt kleiner als 90 mm.

Besonders bevorzugt ist der Schaumstoff aus einer Gruppe von Schaumstoffen ausgewählt, welche PU-Weichschaum enthält. Insbesondere handelt es sich bei dem Schaumstoff um einen PU-Weichschaum. Es kommt für imprägnierten Schaum insbesondere PU-Weichschaum infrage.

Es wird daher vorgeschlagen, dass vergleichsweise schmale Streifen aus imprägnierten Schaumstoff komprimiert werden. Dabei ist es möglich, dass mehrere Streifen an Schaumstoff parallel zueinander gefördert werden.

Durch die erfindungsgemäße Vorgehensweise kann eine Fixierung des Schaumstoffstreifens sowohl oberhalb als auch unterhalb bereits zu Beginn des Komprimierungsprozesses bei einer geringen Komprimierung erreicht werden. Weiterhin ist es möglich, dass ein paralleles Führen des Schaumstoffstreifens im Zuge der Komprimierung erfolgt.

Bevorzugt wird der Schaumstoff mittels wenigstens eines Transportbandes gefördert, welches eine Beschichtung und insbesondere eine Silikonbeschichtung aufweist. Bevorzugt wird also als Transporteinrichtung ein geeignetes Medium gewählt, welches einerseits eine geringe Verschmutzung durch ein klebriges Imprägnat erfährt und trotzdem eine ausreichend hohe Haftreibungskraft zur Fixierung bietet. Besonders bevorzugt wird ein Förderband gewählt, welches eine Silikonbeschichtung aufweist. Bevorzugt wird allgemein eine Fördereinrichtung bzw. ein Förderband gewählt, welches eine vergleichsweise hohe Haftreibung mit dem Schaumstoff erreicht und dennoch eine vergleichsweise niedrige Verschmutzungsneigung.
Vorteilhaft wird die wenigstens eine Transporteinrichtung bzw. wird das wenigstens eine Transportband und werden bevorzugt beide Transportbänder derart ausgelegt, dass deren Abstand am Anfang des Komprimierungsvorgangs größer ist als am Ende des Komprimierungsvorgangs.

Besonders bevorzugt ist daher ein maximaler Abstand zwischen den Kompressionseinrichtungen in der Transporteinrichtung größer als eine Höhe des Schaumstoffs in dessen expandierten Zustand. Bevorzugt verringert sich dieser Abstand der beiden Kompressionseinrichtungen in der Transporteinrichtung und verringert sich insbesondere auf einen minimalen und/oder vorgewählten Abstand.

Bei einem weiteren bevorzugten Verfahren liegt der geringere Abstand bei mehr als 4 %, bevorzugt bei mehr als 5 %, bevorzugt bei mehr als 7 %, bevorzugt bei mehr als 8 % und besonders bevorzugt bei mehr als 10 % der Ausgangsschaumstärke des transportierten Schaumstoffes.

Bei einem weiteren bevorzugten Verfahren liegt der geringere Abstand bei weniger als 40 %, bevorzugt bei weniger als 35 %, bevorzugt bei weniger als 30 %, bevorzugt bei weniger als 20 % und besonders bevorzugt bei weniger als 16 % der Ausgangsschaumstärke. Dies bedeutet, dass durch die beiden Kompressionseinrichtungen der Schaumstoff entsprechend auf die hier genannten Werte komprimiert wird. Dieses Komprimieren kann dabei wie oben erwähnt insbesondere durch die schräge Anstellung der Kompressionseinrichtungen gleichmäßig erfolgen.

Bei einem weiteren bevorzugten Verfahren wird der Schaumstoff mit einer Transportgeschwindigkeit gefördert, welche größer ist als 0,1 m/min. Bevorzugt wird der Schaumstoff während der Kompression mit einer Transportgeschwindigkeit gefördert, welche kleiner ist als 12 m/min. Bevorzugt ergibt sich damit eine Kompressionsgeschwindigkeit des Schaumstoffs, welche größer ist als 0,3 m/min. Besonders bevorzugt ergibt sich eine Kompressionsgeschwindigkeit des Schaumstoffs, welche kleiner ist als 5m/min

Bein einem weiteren bevorzugten Verfahren wird der Schaumstoff wenigstens zeitweise gekühlt. Besonders bevorzugt kann dabei eine Kühlung im Bereich der Komprimierung stattfinden, also insbesondere im Bereich der komprimierenden Förderbänder. Auf diese Weise könnte die Rückstellung des Schaumstoffes zusätzlich verzögert werden.

Bevorzugt erfolgt dabei eine Kühlung mittels Luft. Es wäre aber auch möglich, dass die Förderbänder selbst kühlende Oberflächen aufweisen.

Bei einem weiteren bevorzugten Verfahren werden die Förderbänder mit unterschiedlichen Geschwindigkeiten betrieben. Dies kann insbesondere dann vorteilhaft sein, wenn die Förderbänder keilförmig zulaufen, bzw. eines der Förderbänder sich in der Transportrichtung erstreckt und dass andere schräg hierzu. In diesem Falle können die durch die schräge Anstellung entstehenden Wegdifferenzen ausgeglichen werden.

Bei einem weiteren bevorzugten Verfahren erstreckt sich ein unterhalb des Schaumstoffes angeordnetes Förderband bzw. eine unterhalb des Schaumstoffes liegende Fördereinrichtung parallel zur Transportrichtung des Schaumstoffes (etwa einer horizontalen Richtung) und das andere Förderband ist schräg zu dieser Richtung angeordnet.

Bei einem weiteren bevorzugten Verfahren wird der imprägnierte Schaumstoff mit einer Beschichtung versehen, wobei diese Beschichtung bevorzugt eine Folie und/oder ein Flüssigkunststoff ist.

Die vorliegende Erfindung ist weiterhin auf eine Vorrichtung zum Herstellen von komprimierten Schaumstoffen und/oder von Dichtbändern gerichtet. Diese Vorrichtung weist eine Transporteinrichtung zum Transportieren des Schaumstoffes in einer vorgegebenen Transporteinrichtung auf und eine erste Kompressionseinrichtung sowie eine zweite Kompressionseinrichtung, zwischen denen der Schaumstoff wenigstens zeitweise förderbar ist, wobei diese Kompressionseinrichtungen eine Kompression des Schaumstoffes in einer vorgegebenen Kompressionsrichtung bewirken, wobei diese Kompressionsrichtung insbesondere senkrecht zu der Transportrichtung steht,

Erfindungsgemäß weist wenigstens eine dieser Kompressionseinrichtungen eine sich entlang des Transportpfads des Schaumstoffes erstreckende Kompressionsfläche auf, welche den Schaumstoff wenigstens zeitweise kontaktiert, um den Schaumstoff zu komprimieren.

Es wird daher auch vorrichtungsseitig vorgeschlagen, dass die Vorrichtung eine Kompression entlang einer Kompressionsfläche vornimmt, welche sich wenigstens abschnittsweise entlang des Transportpfads des Schaumstoffs erstreckt.

Bei einer weiteren vorteilhaften Ausführungsform dienen die Kompressionseinrichtungen auch gleichzeitig als Transporteinrichtungen und/oder Fördereinrichtungen.

Bevorzugt weist wenigstens eine dieser Kompressionseinrichtungen ein umlaufendes Band auf, welches den Schaumstoff wenigstens zeitweise kontaktiert, um den Schaumstoff so zu komprimieren. Bevorzugt wird die oben erwähnte Kompressionsfläche durch diejenige Oberfläche des umlaufenden Bandes ausgebildet, welches den Schaumstoff kontaktiert.

Bei einer weiteren vorteilhaften Ausführungsform weist die Vorrichtung eine Imprägniereinrichtung auf, welche den Schaumstoff imprägniert. Diese Imprägniereinrichtung kann dabei ein Tauchbad aufweisen, durch welches der Schaumstoff gefördert wird.

Bei einer weiteren vorteilhaften Ausführungsform ist diese Imprägniereinrichtung in der Transportrichtung des Schaumstoffes vor der oder den Kompressionseinrichtungen angeordnet.

Bei einer weiteren vorteilhaften Ausführungsform weist die Vorrichtung eine Anordnungseinrichtung auf, welche an wenigstens einer Oberfläche des Schaumstoffs ein Klebeband und insbesondere ein doppelseitiges Klebeband anordnet. Bevorzugt ist diese Anordnungseinrichtung in der Transportrichtung des Schaumstoffes nach den Kompressionseinrichtungen angeordnet.

Bei einer weiteren vorteilhaften Ausführungsform weist die Vorrichtung eine Konfektioniereinrichtung auf, welche den so komprimierten Schaumstoff auf einer Rolle aufrollt bzw. als Rolle konfektioniert.

Vorteile und Zweckmäßigkeiten sind der nachfolgenden Beschreibung in Verbindung mit der Zeichnung zu entnehmen. Hierbei zeigen:
- Fig. 1: eine schematische Darstellung zur Veranschaulichung eines erfindungsgemäßen Verfahrens;
- Fig. 2: eine Ausgestaltung einer Fördereinrichtung;
- Fig. 3: eine alternative Ausgestaltung einer Fördereinrichtung; und
- Fig. 4: eine weitere alternative Ausgestaltung einer Fördereinrichtung.

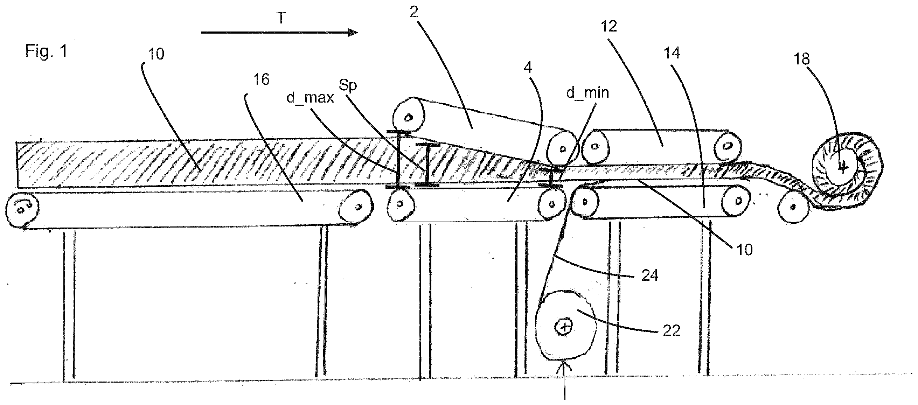

Fig. 1 zeigt eine schematische Darstellung eines erfindungsgemäßen Verfahrens. Dabei ist zunächst ein Zuführband 16 vorgesehen, welches einen Schaumstoff, etwa einen Schaumstoffstreifen 10 zuführt. Der Schaumstoff wird zwischen zwei Transportbändern 2 und 4 gefördert, deren Abstand sich in der Transportrichtung T verringert.

Auf diese Weise wird der Schaumstoff in der Transportrichtung bzw. während seines Transports in der Transportrichtung komprimiert. Ein Spalt zwischen den beiden Transporteinrichtungen 2 und 4 verringert sich daher (bevorzugt kontinuierlich). Die dem Schaumstoff 10 zugewandten Oberflächen der beiden Transporteinrichtungen 2, 4 sind daher die jeweiligen Kompressionsflächen, welche zum Komprimieren des Schaumstoffs dienen.

Das Bezugszeichen d_max bezieht sich auf einen maximalen Abstand zwischen den beiden Transporteinrichtungen 2, 4 und das Bezugszeichen d_min auf einen minimalen Abstand zwischen den beiden Transporteinrichtungen 2, 4.

Die Bezugszeichen 12 und 14 beziehen sich auf zwei weitere Transportbänder, zwischen denen der Schaumstoff 10 weiter gefördert wird. Ein Abstand zwischen diesen beiden weiteren Transportbändern entspricht dabei im Wesentlichen der Spaltbreite am Ende der beiden erstgenannten Transporteinrichtungen 2 und 4 oder verringert sich leicht weiter.

Damit dienen die beiden weiteren Transportbänder zu dem Zweck, um einen durch die beiden Transporteinrichtungen erreichten Kompressionsgrad zu halten oder leicht zu erhöhen.

Das Bezugszeichen 24 bezieht sich auf ein (insbesondere doppelseitiges) Klebeband, welches hier an einer Unterseite des Schaumstoffs angebracht und insbesondere angeklebt wird. Dieses Klebeband kann dabei auf der dem Schaumstoff abgewandten Oberfläche mit einem Liner bestückt sein. Das Klebeband wird von einer Rolle 22 abgewickelt.

Nach dem Transport des (nunmehr mit dem Klebeband bestückten) Schaumstoffs wird dieses auf einem Wickelkern aufgewickelt, um so insgesamt die Konfektionierung einer Dichtbandrolle zu erreichen. Daneben ist es noch möglich, dass die so entstehende Rolle in eine Vielzahl von mehreren Rollen geschnitten wird.

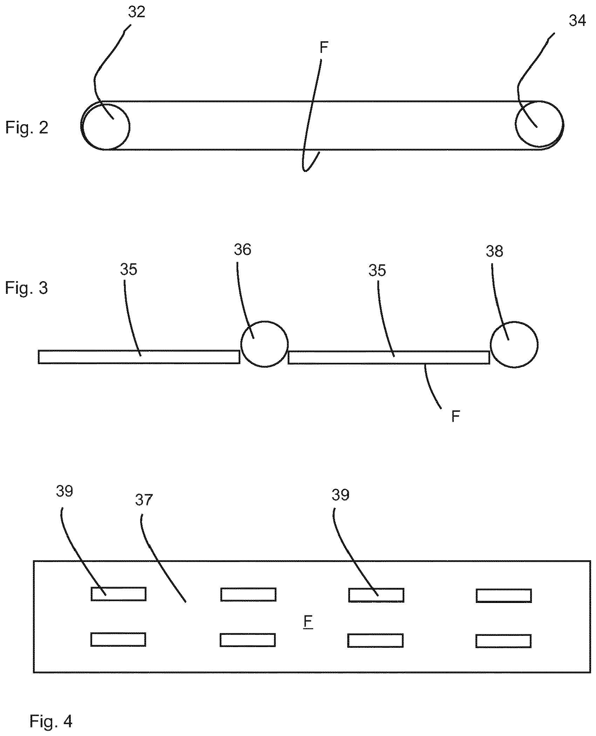

Fig. 2 zeigt eine Darstellung einer Transporteinrichtung. In diesem Falle west die Transporteinrichtung ein umlaufendes Förderband auf, welches von zwei endseitigen Rollen 32 und 34 umgelenkt wird. Anstelle eines Förderbandes könnte auch eine Förderkette vorgesehen sein. Daneben könnten (nicht gezeigte) Stützrollen vorgesehen sein, welche das Transportband zwischen den beiden endseitigen Rollen 32 und 34 stützen. Das Bezugszeichen F kennzeichnet die Förderebene, welche durch das Transportband bzw. dessen nach außen weisende Oberfläche gebildet wird. Diese Förderebene stellt damit auch die Kompressionsfläche da

Fig. 3 zeigt eine weitere Ausführungsform einer Transporteinrichtung. Diese weist eine Vielzahl von Platten 35 auf, welche stationär angeordnet sind. Zwischen diesen Platten sind Förderrollen angeordnet und zwar hier derart, dass sie nur geringfügig über die Förderebene F, welche von der Oberfläche der stationären Platten 35 gebildet wird, hinausstehen. Die einzelnen Förderrollen erstrecken sich dabei entlang der vollständigen Breite des (nicht gezeigten) Schaumstoffes, in Fig. 3 daher in einer Richtung, die senkrecht zu der Figurenebene steht.

Es wäre dabei möglich dass die einzelnen Förderrollen 36 und 38 angetrieben sind. Auch könnten die Drehbewegungen der einzelnen Förderrollen miteinander gekoppelt sein. Allerdings wäre es auch möglich, dass einzelne Förderrollen nicht angetrieben sind, sondern selbst durch die Bewegung des Schaumstoffs angetrieben werden können.

Fig. 4 zeigt eine weitere Ausgestaltung der Transporteinrichtung, hier allerdings in einer Draufsicht auf die Förderebene F. Auch hier ist wieder eine stationäre Platte 37 vorgesehen, welche hier jedoch eine Vielzahl von Öffnungen aufweist, in der wiederum eine Vielzahl von Rollen 39 angeordnet ist, die sich hier jedoch nicht entlang der gesamten Breite des (nicht gezeigten) Schaumstoffes erstrecken sondern relativ schmal sind. Auch hier wäre es wiederum möglich, dass alle oder einzelne dieser Rollen angetrieben sind, oder auch dass einige dieser Rollen "leer" laufen können bzw. von dem Schaumstoff bzw. dessen Bewegung angetrieben werden können.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 2: erste Transporteinrichtung und/oder Kompressionseinrichtung
- 4: zweite Transporteinrichtung und/oder Kompressionseinrichtung
- 10: Schaumstoff
- 12, 14: weitere Transport-und/oder /Nachkomprimiereinrichtung
- 16: Förderband
- 18: Wickelkern
- 22: Rolle
- 24: Doppelseitiges Klebeband
- 35: Platte
- 36,38: Förderrollen
- 37: Stationäre Platte
- 39: Rollen
- F: Förderfläche
- Sp: Spalt
- d_max: maximaler Abstand zwischen den Transporteinrichtungen 2,4
- d_min: minimaler Abstand zwischen den Transporteinrichtungen 2,4

## Patentansprüche

1. Verfahren zum Komprimieren von Schaumstoffen (1) und insbesondere zum Herstellen von Dichtbändern, wobei ein Schaumstoff (1) entlang eines vorbestimmten Transportpfads transportiert wird und wenigstens zeitweise zwischen einer ersten Kompressionseinrichtung (2) und einer zweiten Kompressionseinrichtung (4) gefördert wird und durch diese beiden Kompressionseinrichtungen in wenigstens eine Kompressionsrichtung (Z) komprimiert wird,
**dadurch gekennzeichnet, dass**
wenigstens eine dieser Kompressionseinrichtung (2,4) eine sich entlang des Transportpfads des Schaumstoffes erstreckende Kompressionsfläche aufweist, welche den Schaumstoff wenigstens zeitweise kontaktiert um den Schaumstoff zu komprimieren.

2. Verfahren nach Anspruch 1,
**dadurch gekennzeichnet, dass**
wenigstens eine dieser Kompressionseinrichtungen (2, 4) ein umlaufendes Band aufweist, welches den Schaumstoff wenigstens zeitweise kontaktiert um den Schaumstoff zu komprimieren.

3. Verfahren nach Anspruch 2,
**dadurch gekennzeichnet, dass**
auch die andere dieser Kompressionseinrichtungen (2,4) ein umlaufendes Band aufweist, welches den Schaumstoff wenigstens zeitweise kontaktiert, um den Schaumstoff zu komprimieren.

4. Verfahren nach wenigstens einem der vorangegangenen Ansprüche,
**dadurch gekennzeichnet, dass**
der Schaumstoff durch den zwischen den Kompressionseinrichtungen gebildeten Zwischenraum gefördert wird, wobei sich dieser Zwischenraum in der Transportrichtung verjüngt.

5. Verfahren nach wenigstens einem der vorangegangenen Ansprüche,
**dadurch gekennzeichnet, dass**
wenigstens eines der beiden umlaufenden Bänder (2, 4durch eine Antriebseinrichtung (12) angetrieben wird.

6. Verfahren nach wenigstens einem der vorangegangenen Ansprüche,
**dadurch gekennzeichnet, dass**
der Schaumstoff ein imprägnierter Schaumstoff ist.

7. Verfahren nach wenigstens einem der vorangegangenen Ansprüche,
**dadurch gekennzeichnet, dass**
an wenigstens einer Oberfläche des Schaumstoffs ein adhäsives Element und/oder ein Klebeband angeordnet wird.

8. Verfahren nach wenigstens einem der vorangegangenen Ansprüche,
**dadurch gekennzeichnet, dass**
der Schaumstoff wenigstens zeitweise zwischen zwei weiteren Transporteinrichtungen (12,14) transportiert wird, welche ebenfalls eine sich entlang des Transportpfads erstreckende Kompressionsfläche aufweisen.

9. Verfahren nach wenigstens einem der vorangegangenen Ansprüche,
**dadurch gekennzeichnet, dass**
der Schaumstoff eine Breite aufweist, die größer ist als 5 mm, bevorzugt größer als 10mm, bevorzugt größer als 15 mm, bevorzugt größer als 20 mm, bevorzugt größer als 30 mm, bevorzugt größer als 50 mm und/oder dass der Schaumstoff eine Breite aufweist, die kleiner ist als 400 mm, bevorzugt kleiner als 300 mm, bevorzugt kleiner als 200 mm, bevorzugt kleiner als 150 mm und besonders bevorzugt kleiner als 100 mm.

10. Verfahren nach wenigstens einem der vorangegangenen Ansprüche,
**dadurch gekennzeichnet, dass**
der Schaumstoff eine Höhe aufweist, die größer ist als 5 mm, bevorzugt größer als 10 mm, bevorzugt größer als 15 mm, bevorzugt größer als 20 mm, bevorzugt größer als 25 mm und/oder dass der Schaumstoff eine Höhe aufweist, die kleiner ist als 200 mm, bevorzugt kleiner als 170 mm, bevorzugt kleiner als 150 mm, bevorzugt kleiner als 100 mm und besonders bevorzugt kleiner als 90 mm.

11. Verfahren nach wenigstens einem der vorangegangenen Ansprüche,
**dadurch gekennzeichnet, dass**
wenigstens ein Transportband eine Beschichtung und insbesondere eine Silikonbeschichtung aufweist.

12. Verfahren nach wenigstens einem der vorangegangenen Ansprüche,
**dadurch gekennzeichnet, dass**
ein maximaler Abstand d_max zwischen den Kompressionseinrichtungen größer ist als eine Höhe des Schaumstoffs in dessen expandierten Zustand und dieser Abstand sich auf einen geringeren Abstand d_min verringert.

13. Verfahren nach dem vorangegangenen Anspruch,
**dadurch gekennzeichnet, dass**
der geringere Abstand bei mehr als 4 %, bevorzugt bei mehr als 5 % , bevorzugt bei mehr als 7 %, bevorzugt bei mehr als 8 % , besonders bevorzugt bei mehr als 10 % der Ausgangsschaumstärke liegt und/oder der geringere Abstand bei weniger als 40%, bevorzugt bei weniger als 35 % , bevorzugt bei weniger als 30 %, bevorzugt bei weniger als 20 % , besonders bevorzugt bei weniger als 16 % der Ausgangsschaumstärke liegt.

14. Verfahren nach wenigstens einem der vorangegangenen Ansprüche,
**dadurch gekennzeichnet, dass**
der imprägnierte Schaumstoff mit einer Beschichtung versehen wird, wobei diese Beschichtung bevorzugt eine Folie und/oder ein Flüssigkunststoff ist.

15. Vorrichtung zum Herstellen von komprimierten Schaumstoffen und/oder von Dichtbändern mit einer Transporteinrichtung zum Transportieren des Schaumstoffes in einer vorgegebenen Transporteinrichtung und mit einer ersten Kompressionseinrichtung (2) sowie einer zweiten Kompressionseinrichtung (4), zwischen denen der Schaumstoff (1) wenigstens zeitweise förderbar ist, wobei diese Kompressionseinrichtungen (2,4) eine Kompression des Schaumstoffes in einer vorgegebenen Kompressionsrichtung (Z) bewirken, wobei diese Kompressionsrichtung insbesondere senkrecht zu der Transportrichtung steht,
**dadurch gekennzeichnet, dass**
wenigstens eine dieser Kompressionseinrichtung (2,4) eine sich entlang des Transportpfads des Schaumstoffes erstreckende Kompressionsfläche aufweist, welche den Schaumstoff wenigstens zeitweise kontaktiert um den Schaumstoff zu komprimieren.
